# EUROPÄISCHE PATENTANMELDUNG

(11) **EP 4 527 546 A2**
(43) Veröffentlichungstag der Anmeldung: **26.03.2025**
(21) Anmeldenummer: 24198815.3
(22) Anmeldetag: 06.09.2024
(51) Int. Cl.: B23P 19/06, B23P 19/00, B25J 15/00

(54) **MODUL ZUR AUTOMATISIERTEN HANDHABUNG VON SCHRAUBEN**

(30) Priorität: 19.09.2023 DE 102023125296
(71) Anmelder: Liebherr-Verzahntechnik GmbH, 87437 Kempten (DE)
(72) Erfinder: Pollmann, Jan, 87439 Kempten (DE); Hößle, Florian, 87527 Sonthofen (DE); Hiemer, Lukas, 87452 Altusried (DE)
(74) Vertreter: Behr, Wolfgang

(57) **Zusammenfassung**

Die vorliegende Erfindung umfasst ein Modul zur automatisierten Handhabung von Schrauben (60), das Modul umfassend eine Schnittstelle (10) zur Montage des Moduls an einer Handlingeinheit (100), insbesondere einem Roboter, eine Konsole und einen Schrauber. Erfindungsgemäß weist das Modul ein Untergriffelement (40) mit einer Greifkontur (41) auf, welche unter den Kopf (61) einer Schraube verfahrbar ist, um diese am Modul zu sichern.

## Beschreibung

Die vorliegende Erfindung betrifft ein Modul zur automatisierten Handhabung von Schrauben.

Zum automatisierten Setzen von Schrauben ist es bekannt, die Schrauben aus einem Behälter in eine vor dem Schrauber angebrachte Schraubaufnahme einzuschießen, durch welche die Schrauben beim Verschrauben gehalten werden. Allerdings sind solche bekannten Schraubenaufnahmen spezifisch an nur einen Typ einer Schraube angepasst, und daher wenig flexibel. Weiterhin ist das Einschießen von langen und schweren Schrauben nicht möglich.

Für das Lösen von Schrauben gibt es bisher noch keine prozesssichere Möglichkeit, die Schraube beim oder nach dem Lösen zu sichern.

Aufgabe der vorliegenden Erfindung ist es daher, ein verbessertes Modul zur automatisierten Handhabung von Schrauben zur Verfügung zu stellen.

Diese Aufgabe wird durch ein Modul gemäß Anspruch 1 gelöst. Bevorzugte Ausgestaltungen der vorliegenden Erfindung sind Gegenstand der Unteransprüche.

Die vorliegende Erfindung umfasst ein Modul zur automatisierten Handhabung von Schrauben, das Modul umfassend eine Schnittstelle zur Montage des Moduls an einer Handlingeinheit, insbesondere einem Roboter, eine Konsole und einen Schrauber. Erfindungsgemäß weist das Modul ein Untergriffelement mit einer Greifkontur auf, welche unter den Kopf einer Schraube verfahrbar ist, um diese am Modul zu sichern.

Durch das Untergriffelement kann die Schraube am Modul gesichert werden. Insbesondere kann die Schraube verliersicher zwischen dem Untergriffelement und einem Bit des Schraubers gehalten werden.

Das Untergriffelement ermöglicht es zudem, viele unterschiedliche Schrauben mit dem gleichen Modul zu Greifen.

Insbesondere kann das Modul beim Lösen von Schrauben zum Einsatz kommen, insbesondere bei der Demontage eines verschraubten Bauteils, beispielsweise bei der Demontage einer Batterieeinheit.

Durch die vorliegende Erfindung ergibt sich ein sicheres Entnehmen der durch den Schrauber gelösten Schauben, da diese beim und/oder nach dem Lösen durch den Schrauber über das Untergriffelement gesichert werden.

Alternativ oder zusätzlich kann das Modul zum Setzen der Schrauben bei Verschrauben eines Bauteils zum Einsatz kommen.

Lange und/oder schwere Schraubenbolzen können oftmals nicht zugeschossen werden, sondern müssen aus einer Bereitstellung einzeln entnommen werden. Das erfindungsgemäße Modul kann zum Setzen der Schrauben eingesetzt werden, wobei das Untergriffelement zum Entnehmen der Schrauben aus der Bereitstellung genutzt wird, so dass die Schraube beim Verschrauben gleich am Bit angeordnet ist. Insbesondere kann auch hier die Schraube zwischen Bit und Untergriffelement verliersicher gehalten werden. Ein zusätzliches Handling zum "Schrauben picken und bereitstellen" kann somit entfallen

Auch hier kann das Modul beispielsweise bei der Montage einer Batterieeinheit eingesetzt werden.

Gemäß einer möglichen Ausgestaltung der vorliegenden Erfindung ist die Greifkontur gabelförmig ausgeführt und weist zwei Zinken auf, welche unter den Kopf der Schraube verfahrbar sind, wobei zwischen den Zinken eine Aussparung für die Schraube vorgesehen ist. Dies ermöglicht ein sicheres Greifen und/oder Halten der Schraube am Kopf der Schraube. Weiterhin können viele unterschiedliche Schrauben mit der gleichen Greifkontur gegriffen werden.

Gemäß einer möglichen Ausgestaltung der vorliegenden Erfindung ist das Modul so ausgestaltet, dass die Schraube nur von einer Seite untergriffen wird. Der nur einseitige Untergriff erleichtert es, viele unterschiedliche Schrauben mit dem gleichen Modul zu Greifen.

Gemäß einer möglichen Ausgestaltung der vorliegenden Erfindung erstreckt sich die Greifkontur in einer Untergriffstellung von jener Seite aus gesehen, von welcher die Greifkontur unter den Kopf der Schraube verfahren wird, über eine durch die Achse des Schraubers definierte Mittelebene der Schraube hinaus weiter zur freien Seite hin, so dass der Kopf der Schraube auf beiden Seiten der Mittelebene durch die Greifkontur gehalten wird. Dies erlaubt ein sicheres Halten der Schraube, ohne dass die Greifkontur exakt an die jeweilige Schraube angepasst sein müsste.

Gemäß einer möglichen Ausgestaltung der vorliegenden Erfindung reichen hierfür die Zinken der Greifkontur über die Mittelebene der Schraube hinaus.

Gemäß einer möglichen Ausgestaltung der vorliegenden Erfindung ist das Untergriffelement über einen Aktor in eine Untergriffstellung unter den Kopf der Schraube bewegbar. Hierbei kann es sich insbesondere um einen Zylinder, insbesondere einen Pneumatik- oder Hydraulikzylinder oder einen elektrischen Zylinder handeln.

Gemäß einer möglichen Ausgestaltung der vorliegenden Erfindung ist das Untergriffelement verschwenkbar an dem Modul angeordnet ist, wobei die Greifkontur durch eine Schwenkbewegung des Untergriffelements unter den Kopf der Schraube verfahrbar ist. Hierdurch lässt sich eine platzsparende und einfache Konstruktion erreichen.

Gemäß einer möglichen Ausgestaltung der vorliegenden Erfindung ist das Untergriffelement entlang einer Bogenführung geführt, wobei ein Verfahren entlang der Bogenführung die Schwenkbewegung erzeugt. Dies ermöglicht ein Untergreifen der Schrauben auch dann, wenn nur sehr wenig Platz für das Untergriffelement zur Verfügung steht.

Gemäß einer möglichen Ausgestaltung der vorliegenden Erfindung ist die Greifkontur an mindestens einem Schwenkarm angeordnet, welcher in einer Wartestellung des Untergriffelements in einer Ansicht senkrecht zu einer Schwenkebene zumindest teilweise mit der Achse des Schraubers überlappt und sich in einer Ansicht entlang der Schwenkebene neben der Achse des Schraubers erstreckt. Dies ermöglicht eine sehr kompakte Schwenkanordnung.

Gemäß einer möglichen Ausgestaltung der vorliegenden Erfindung sind zwei Schwenkarme vorgesehen, welche die Greifkontur tragen und sich in einer Ansicht entlang der Schwenkebene auf gegenüberliegenden Seiten der Achse des Schraubers erstrecken und/oder auf gegenüberliegenden Seiten der Achse des Schraubers geführt sind.

Bevorzugt geht der Schrauber hierbei in zumindest einer Position des Untergriffelements zwischen den Schwenkarmen hindurch, insbesondere in der Wartestellung. Gemäß einer möglichen Ausgestaltung der vorliegenden Erfindung weist das Modul mindestens einen Antrieb auf, mit welchem der Schrauber entlang seiner Achse relativ zum Untergriffelement verfahrbar ist.

Gemäß einer möglichen Ausgestaltung der vorliegenden Erfindung umfasst das Modul hierbei eine Steuerung, welche so ausgestaltet ist, dass sie den mindestens einen Antrieb für mindestens eine und bevorzugt mehrere oder alle der folgenden Tätigkeiten betätigt: zum Verfahren des Schraubers in eine Schraubposition und/oder während des Herausschraubens oder während des Herausschraubens oder Einschraubens der Schraube und/oder zum Klemmen der Schraube.

Gemäß einer möglichen Ausgestaltung der vorliegenden Erfindung wird der Antrieb so betätigt, dass der Schrauber beim Herausschrauben durch die axiale Bewegung der Schraube gegen die Kraft des Antriebs zurückbewegt wird.

Gemäß einer möglichen Ausgestaltung der vorliegenden Erfindung wird der Antrieb so betätigt, dass der Schrauber beim Einschrauben durch die Kraft des Antriebs gegen die Schraube gepresst und mit dieser nach vorne bewegt wird.

Gemäß einer möglichen Ausgestaltung der vorliegenden Erfindung beaufschlagt der Antrieb den Schrauber beim Herausschrauben oder Einschrauben mit einer definierten Kraft. Hierdurch wird die Kraft, mit welcher der Schrauber axial an die Schraube angepresst wird, gesteuert.

Gemäß einer möglichen Ausgestaltung der vorliegenden Erfindung wird der Antrieb so betätigt, dass der Schrauber eine herausgeschraubte oder zu setzende Schraube gegen die Greifkontur des Untergriffelementes klemmt.

Gemäß einer möglichen Ausgestaltung der vorliegenden Erfindung umfasst das Modul einen Sensor zur Überwachung der Bewegung des Schraubers in axialer Richtung und/oder einen Sensor zur Überwachung des Drehmoments des Schraubers.

Gemäß einer möglichen Ausgestaltung der vorliegenden Erfindung umfasst das Modul hierbei eine Steuerung, welche so ausgestaltet ist, dass sie während des Schraubvorgangs die Bewegung des Schraubers in axialer Richtung und/oder das Drehmoment des Schraubers überwacht, um einen nicht ordnungsgemäßen Schraubvorgang zu erkennen.

Bei dem mindestens einen Antrieb zum Bewegen des Schraubers kann es sich insbesondere um einen Linearantrieb handeln.

Gemäß einer möglichen Ausgestaltung der vorliegenden Erfindung umfasst das Modul zwei in Serie geschaltete Linearantriebe zum Bewegen des Schraubers, insbesondere zwei Zylinder-Kolbenanordnungen. Die beiden Linearantriebe können unterschiedliche Funktionen übernehmen.

Gemäß einer möglichen Ausgestaltung der vorliegenden Erfindung weisen die beiden Linearantriebe unterschiedliche Verfahrwege auf.

Gemäß einer möglichen Ausgestaltung der vorliegenden Erfindung weist das Modul eine Steuerung auf, welche so ausgestaltet ist, dass sie den ersten Linearantrieb zum Verfahren des Schraubers in eine Schraubposition und/oder während des Herausschraubens oder Einschraubens betätigt. Insbesondere kann der erste Linearantrieb beim Herausschrauben oder Einschraubens der Schraube eine definierte Anpresskraft erzeugen.

Gemäß einer möglichen Ausgestaltung der vorliegenden Erfindung wird der zweite Linearantrieb hierbei nicht betätigt.

Gemäß einer möglichen Ausgestaltung der vorliegenden Erfindung wird der zweite Linearantrieb zu einem Zurückfahren des Schraubers in eine Bit-Wechsel-Position betätigt.

Gemäß einer möglichen Ausgestaltung der vorliegenden Erfindung wird das Modul in einem System eingesetzt, welches eine Bit-Wechselstation umfasst, an welche das Modul gefahren wird, um den Bit zu wechseln. Hierdurch kann das Modul zur Handhabung unterschiedlicher Schrauben eingesetzt werden.

Gemäß einer möglichen Ausgestaltung der vorliegenden Erfindung umfasst das Modul einem Auffangbehälter für die Schrauben.

Gemäß einer möglichen Ausgestaltung der vorliegenden Erfindung ist der Auffangbehälter unter eine am Untergriffelement gehaltene Schraube verfahrbar.

Gemäß einer möglichen Ausgestaltung der vorliegenden Erfindung weist das Modul eine Steuerung auf, welche so ausgestaltet ist, dass die Schraube durch Betätigen eines Antriebs des Untergriffelements und/oder einen Antrieb zum Bewegen des Schraubers in axialer Richtung freigegeben wird, so dass diese in den Auffangbehälter fällt.

Gemäß einer möglichen Ausgestaltung der vorliegenden Erfindung weist der Auffangbehälter einen Entleerungsmechanismus auf. Zum Entleeren des Auffangbehälters wird das Modul bevorzugt über einen zweiten Auffangbehälter gefahren und der Entleerungsmechanismus betätigt, so dass die Schrauben in den zweiten Auffangbehälter fallen. Bei dem Entleerungsmechanismus kann es sich um eine Klappe handeln, welche bevorzugt über einen Antrieb betätigt wird.

Gemäß einer möglichen Ausgestaltung der vorliegenden Erfindung umfasst das Modul eine Schraubenbereitstellung, welche bevorzugt vor den Schrauber verfahrbar ist, um eine Schraube aus der Bereitstellung zu entnehmen.

Bevorzugt ist die Steuerung so ausgestaltet, dass die Schraubenbereitstellung vor den Schrauber verfahren wird, die Schraube entnommen und die Schraubenbereitstellung wieder zurück in eine inaktive Position verfahren wird.

Gemäß einer möglichen Ausgestaltung wird eine Schraubkonsole, an der der Schrauber und das Untergriffelement angeordnet sind, zurückverfahren, bevor die Schraubenbereitstellung vor den Schrauber verfahren wird.

Alternativ kann die Schraubenbereitstellung auch separat zum Modul vorgesehen sein. Bevorzugt ist die Steuerung in diesem Fall so ausgestaltet, dass das Modul zum Aufnehmen einer Schraube vor die Schraubenbereitstellung gefahren wird.

Unabhängig von der Bereitstellung der Schraube über eine am Modul oder extern vorgesehene Schraubenbereitstellung ist die Steuerung bevorzugt so ausgestaltet, dass das Entnehmen erfolgt, indem das Untergriffelement seitlich unter einen Kopf der Schraube verfahren wird, und durch Verfahren des Schraubers in axialer Richtung auf das Untergriffelement zu, die Schraube zwischen Untergriffelement und Bit geklemmt wird.

Gemäß einer möglichen Ausgestaltung der vorliegenden Erfindung weist das Modul eine Linearachse auf, über welche eine Schraubkonsole, an der der Schrauber und das Untergriffelement angeordnet sind, in Richtung der Achse des Schraubers verfahrbar ist. Dies erlaubt beispielsweise die Anordnung des Untergriffelements in einer Arbeitsposition relativ zur Schraube.

Insbesondere ist die Schraubkonsole über die Linearachse relativ zu einem Auffangbehälter für die Schrauben und/oder relativ zu einer Schraubenbereitstellung und/oder relativ zu der Schnittstelle verfahrbar. Die Linearachse weist insbesondere einen Antrieb auf, beispielsweise einen Servoantrieb.

Gemäß einer möglichen Ausgestaltung der vorliegenden Erfindung ist der Schrauber gegenüber der Schraubkonsole und dem daran angeordneten Untergriffelement über mindestens einen weiteren Antrieb in Richtung seiner Achse verfahrbar ist. Insbesondere handelt es sich hierbei um den bereits oben beschriebenen Antrieb und/oder die bereits oben beschriebenen in Serie geschalteten Linearantriebe.

Gemäß einer möglichen Ausgestaltung der vorliegenden Erfindung ist der Auffangbehälter für den Schraubenabwurf unter die Schraube verfahrbar, wenn die Konsole relativ zum Auffangbehälter in eine Abwurfposition verfahren wurde. Insbesondere ist die Steuerung so ausgestaltet, dass der Auffangbehälter und die Schraubkonsole entsprechend verfahren werden.

Gemäß einer möglichen Ausgestaltung der vorliegenden Erfindung ist die Schraubenbereitstellung vor den Schrauber verfahrbar, wenn die Konsole relativ zur Schraubenbereitstellung in eine Aufnahmeposition verfahren wurde. Insbesondere ist die Steuerung so ausgestaltet, dass die Schraubenbereistellung und die Schraubkonsole entsprechend verfahren werden.

Gemäß einer möglichen Ausgestaltung der vorliegenden Erfindung umfasst das Modul eine Steuerung, welche so ausgestaltet ist, dass sie die Linearachse betätigt, um die Schraubkonsole mit dem Untergriffelement und dem Schrauber in eine Arbeitsposition in Bezug auf eine herauszuschraubende oder aufzunehmende Schraube zu verfahren. Insbesondere ist das Untergriffelement hierbei so angeordnet, dass die Greifkontur unter den Kopf einer durch den Schrauber gelösten oder in der Schraubenbereitstellung bereitgestellten Schraube verfahren werden kann.

Gemäß einer möglichen Ausgestaltung der vorliegenden Erfindung umfasst das Modul eine Steuerung, welche so ausgestaltet ist, dass sie die Linearachse betätigt, um die Schraubkonsole mit dem Untergriffelement und dem Schrauber und einer zwischen diesen geklemmten Schraube in eine Einschraubposition zu verfahren, insbesondere in eine Einschraubposition, in welcher die Schraube in ein Schraubloch eingreift.

Gemäß einer möglichen Ausgestaltung der vorliegenden Erfindung umfasst das Modul eine Steuerung, welche so ausgestaltet ist, dass das Untergriffelement zurückverfahren wird und die Schraube frei gibt, wenn die Schraube sich in ihrer Einschraubposition befindet.

Gemäß einer möglichen Ausgestaltung der vorliegenden Erfindung ist die Steuerung so ausgestaltet, dass sie zum Einschrauben der Schraube den Schrauber über eine Achse axial gegenüber dem Untergriffelement in Einschraubrichtung bewegt.

Gemäß einer möglichen Ausgestaltung der vorliegenden Erfindung ist die Steuerung so ausgestaltet, dass sie nach dem Herausschrauben einer Schraube die Linearachse betätigt, um die Schraubkonsole mit dem Untergriffelement und der daran gehaltenen Schraube in eine Abwurfposition zu verfahren.

Gemäß einer möglichen Ausgestaltung der vorliegenden Erfindung ist die Steuerung so ausgestaltet, dass sie nach dem Lösen einer Schraube durch den Schrauber oder nach dem Heranfahren an eine aufzunehmende Schraube die Linearachse betätigt, um die Greifkontur des Untergriffelements in Kontakt mit einer Unterseite des Kopfes zu bringen, während ein Antrieb zum Bewegen des Schraubers in axialer Richtung den Schrauber relativ zur Schraubkonsole in Richtung auf die Greifkontur bewegt, um den Kopf der Schraube zwischen Griffkontur und Bit des Schraubers zu klemmen.

Die vorliegende Erfindung umfasst weiterhin ein System zur automatisierten Handhabung von Schrauben, mit einem Modul, wie es oben beschrieben wurde, einer Handlingeinheit, an welcher das Modul angeordnet ist, und einer Steuerung zur Ansteuerung der Handlingeinheit und des Moduls.

Das System kann wie bereits zum Modul beschrieben zum Lösen der Schrauben und/oder zum Setzen der Schrauben eingesetzt werden, insbesondere bei der Demontage oder der Montage einer Batterieeinheit.

Gemäß einer möglichen Ausgestaltung der vorliegenden Erfindung ist die Steuerung so ausgestaltet, dass die Handlingeinheit das Modul während des Herausschraubens und/oder Setzens einer Schraube nicht verfährt.

Gemäß einer möglichen Ausgestaltung der vorliegenden Erfindung ist die Steuerung so ausgestaltet, dass die Handlingeinheit das Modul verfährt, während eine herausgeschraubte Schraube abgeworfen oder eine neue Schraube aus einer am Modul angeordneten Schraubenbereitstellung aufgenommen wird.

Gemäß einer möglichen Ausgestaltung der vorliegenden Erfindung ist die Steuerung so ausgestaltet, dass die Handlingeinheit das Modul verfährt, um es an eine in einer externen Schraubenbereitstellung bereitgestellten Schraube heranzufahren.

Gemäß einer möglichen Ausgestaltung der vorliegenden Erfindung handelt es sich bei der Handlingeinheit um einen Roboter, insbesondere um einen Roboter mit einem Roboteram mit mehreren rotatorischen Achsen. Beispielsweise kann es sich um einen Industrieroboter mit mindestens 6 Achsen handeln. Bei der Handlingeinheit kann es sich auch um ein Linear- oder Flächenportal handeln.

Gemäß einer möglichen Ausgestaltung der vorliegenden Erfindung ist die Steuerung so ausgestaltet, dass sie die Handlingeinheit und das Modul so ansteuert, dass diese die oben und im folgenden beschriebenen Funktionen und/oder Schritte durchführen. Insbesondere kann die Steuerung so ausgestaltet sein, dass die Handlingeinheit und das Modul die Funktionen und/oder Schritte automatisiert durchführen.

Gemäß einer möglichen Ausgestaltung der vorliegenden Erfindung umfasst die oben oder im folgenden beschriebene Steuerung oder Steuerungen einen Mikroprozessor und einen nicht-flüchtigen Speicher, auf welchem ein Computerprogramm abgespeichert ist, welches beim Ablaufen auf dem Mikroprozessor die oben sowie im folgenden beschriebenen Funktionen und/oder Schritte durchführt. Die Steuerung und insbesondere der Microprozessor steht bevorzugt mit den Aktoren und/oder Sensoren des Moduls und/oder der Handlingeinheit in einer Steuer- und/oder Signalverbindung und steuert die Aktoren an und/oder wertet die Signale der Sensoren aus.

Die vorliegende Erfindung umfasst weiterhin ein Verfahren zur automatisierten Handhabung von Schrauben, mit einem Modul und/oder System, wie sie oben beschrieben wurden. Gemäß dem Verfahren wird die Greifkontur unter den Kopf der Schraube verfahren, um diese am Modul zu sichern.

Gemäß einer möglichen Ausgestaltung der vorliegenden Erfindung erfolgt dies, sobald der Schraubkopf um eine vorbestimmte Strecke herausgeschraubt wurde oder eine Schraube aufgenommen werden soll.

Bevorzugt wird das Verfahren dabei so durchgeführt, wie dies oben und im folgenden im Hinblick auf das Modul und das System bereits beschrieben wurde und noch beschrieben wird.

Die vorliegende Erfindung wird nun anhand eines Ausführungsbeispiels sowie Zeichnungen näher beschrieben.

Dabei zeigen:
- Fig. 1:: ein Ausführungsbeispiel eines erfindungsgemäßen Moduls in einer perspektivischen Ansicht,
- Fig. 2:: eine perspektivische Detailansicht mit dem Untergriffelement des in Fig. 1 gezeigten Ausführungsbeispiels,
- Fig. 3:: eine weitere Detailansicht mit dem Untergriffelement in einer perspektivischen Ansicht von schräg hinten,
- Fig. 4:: eine weitere Detailansicht, in welcher eine Schraube am Untergriffelement gesichert ist, in einer perspektivischen Ansicht, und
- Fig. 5:: die in Fig. 4 gezeigte Anordnung in einer Frontalansicht.

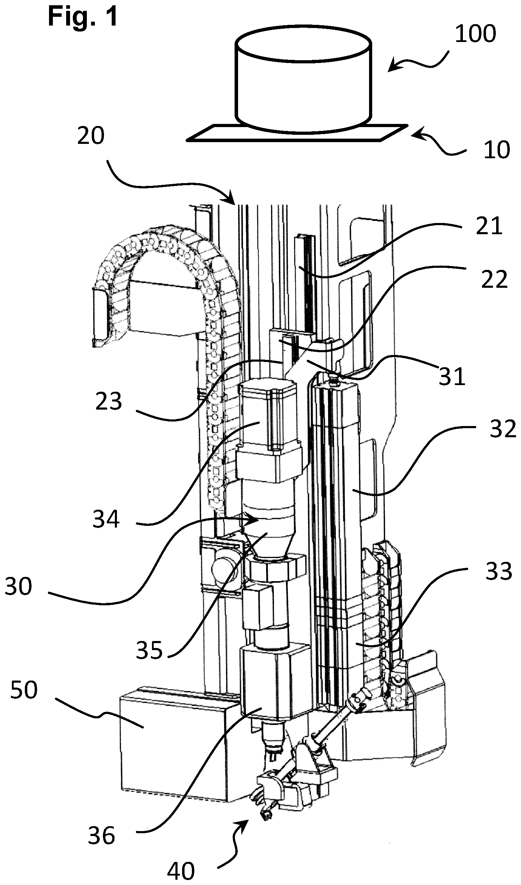

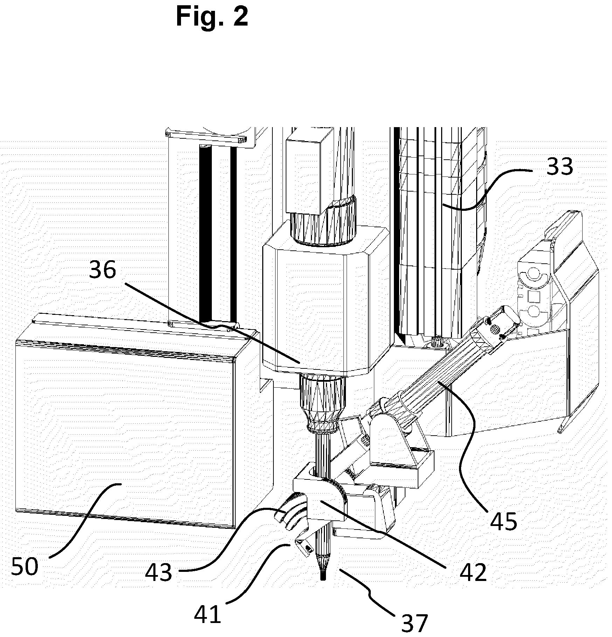

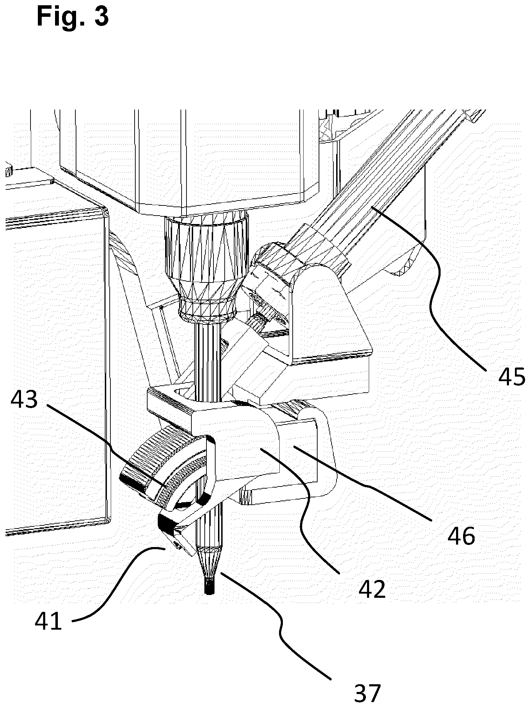

Fig. 1 zeigt ein Ausführungsbeispiel eines erfindungsgemäßen Moduls zur automatisierten Handhabung von Schrauben. Details insbesondere zum Untergriffelement sind in Fig. 2 - 5 ersichtlich.

Das erfindungsgemäße Modul umfasst wie in Fig. 1 schematisch eingezeichnet eine Schnittstelle 10 zur Montage des Moduls an einer Handlingeinheit 100. Bei der Handlingeinheit 100 kann es sich insbesondere um einen Roboter handeln, wobei die Schnittstelle mit dem Endglied des Roboterarms verbunden ist. Die in Fig. 1 lediglich schematisch eingezeichnete Schnittstelle 10 ist an einer Konsole 20 angeordnet, welche die weiteren Komponenten des Moduls trägt.

Das Modul umfasst als Komponenten, welche an der Konsole angeordnet sind, den Schrauber 30 sowie das Untergriffelement 40. Das Untergriffelement 40 weist hierbei wie im Folgenden anhand der Fig. 2 - 5 näher beschrieben eine Greifkontur auf, welche unter den Kopf einer Schraube verfahrbar ist, um diese am Modul zu sichern.

Die nähere Ausgestaltung der Konsole, des Schraubers und des Untergriffelementes sowie weiterer Elemente des Moduls werden im Folgenden näher beschrieben.

Wie insbesondere aus Fig. 2 - 5 ersichtlich, umfasst das Untergriffelement 40 eine Greifkontur 41, welche von einer Seite seitlich unter den Kopf der Schraube verfahrbar ist, um den Kopf der Schraube von unten zu halten, während der Kopf der Schraube von oben mit dem Bit 37 des Schraubers 30 beaufschlagt wird und daher zwischen der Greifkontur und dem Bit eingeklemmt wird.

Die Greifkontur 41 ist gabelförmig ausgestaltet und umfasst zwei Zinken, zwischen welchen eine Aussparung vorgesehen ist. Die Greifkontur kann hierbei so unter den Kopf der Schraube geschoben werden, dass die beiden Zinken unterhalb des Kopfes der Schraube angeordnet sind und der Schraubenkörper sich durch die Aussparung zwischen den Zinken hindurch in axialer Richtung erstreckt.

Die Zinken sind im Ausführungsbeispiel so ausgestaltet, dass sie sich in der Halteposition, in welcher die Greifkontur unter dem Kopf der Schraube angeordnet ist, über eine Mittelebene der Schraube hinweg erstrecken, so dass der Kopf der Schraube von den Zinken auf beiden Seiten einer solchen Mittelebene gehalten wird.

Auf der der Greifkontur des Greifelements gegenüberliegenden Seite ist dagegen kein weiteres Greifelement vorgesehen, der Kopf der Schraube wird daher nur von einer Seite aus untergriffen. Hierdurch muss der Kopf der Schraube lediglich von einer Seite her zugänglich sein muss, um durch das Untergriffelement gesichert zu werden.

Im Ausführungsbeispiel ist die Greifkontur 41 an einem Schwenkelement 42 angeordnet. Das Schwenkelement 42 ist an einer bogenförmigen Schwenkführung 43 verschieblich geführt, und wird durch die Bewegung entlang der Schwenkführung 43 verschwenkt. Hierdurch ist nur ein sehr kleiner Bauraum für das Verschwenken der Greifkontur 41 notwendig.

Das Schwenkelement 42 weist hierbei zwei Schwenkarme auf, an deren distalen Ende die Greifkontur 41 angeordnet ist, und deren proximale Enden an der Schwenkführung 43 gelagert sind. Zwischen den beiden Schwenkarmen ist eine Aussparung, durch welche die Drehachse des Schraubers und der Bit 37 des Schraubers hindurchgehen können.

Die Achse des Schraubers verläuft in der in Fig. 2 gezeigten Wartestellung des Untergriffelementes, in welcher die Greifkontur nicht in Eingriff mit dem Kopf der Schraube ist, zwischen den beiden Schwenkarmen hindurch zur Schraube. Hierdurch kann der Bit 37 zwischen den beiden Schwenkarmen hindurch zum Kopf der Schaube verfahren werden.

Bei einem Herausschrauben der Schraube bewegt sich der Bit 37 des Schraubers durch die Schraubbewegung der Schraube nach oben in den Bereich des Untergriffelementes, bis der Kopf der Schraube auf einer Höhe angeordnet ist, dass er durch Verschwenken des Untergriffelementes von der Greifkontur 41 untergriffen werden kann.

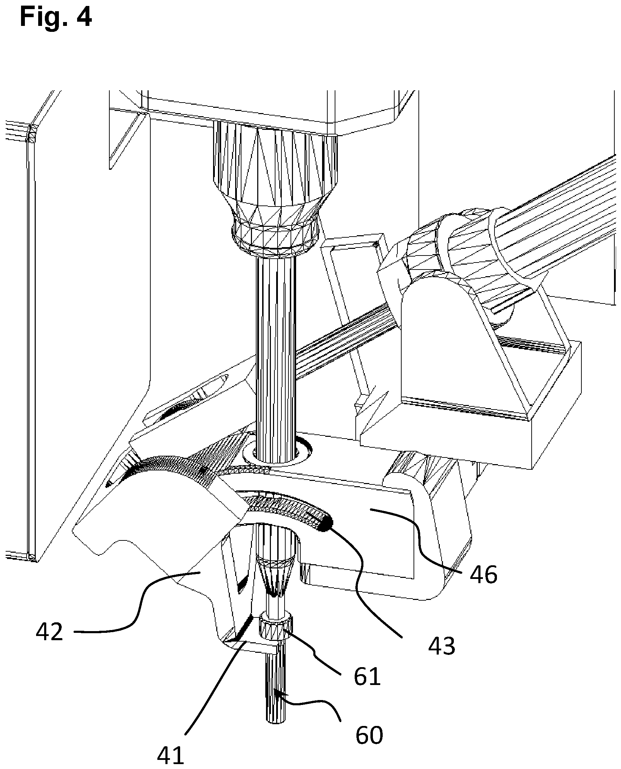

Wie in Fig. 4 besonders klar zu erkennen ist das Schwenkelement 42 an einem Lagerblock 46 gelagert, welcher eine Öffnung aufweist, durch welche das Bit und die Schraubachse des Schraubers hindurchgeht.

Im Ausführungsbeispiel ist an dem Lagerblock 46 die Schwenkführung 43 angeordnet, an welcher das Schwenkelement 42 verschiebbar gelagert ist.

Im Ausführungsbeispiel sind hierbei beide Schwenkarme des Schwenkelementes 42 jeweils an einer Schwenkführung 43 gelagert. Insbesondere weist der Lagerblock 46 daher auf seinen beiden Außenseiten jeweils eine solche Schwenkführung auf.

Zum Verschwenken des Schwenkelementes 42 ist ein Schwenkantrieb 45 vorgesehen, welcher das Schwenkelement 42 entlang der Schwenkführung verschiebt. Im Ausführungsbeispiel handelt es sich bei dem Schwenkantrieb 45 um einen Zylinder, insbesondere um einen Hydraulik- und/oder Pneumatikzylinder oder einen elektrischen Zylinder. Dieser greift im Ausführungsbeispiel an einem der beiden Schwenkarme an.

Im Ausführungsbeispiel ist die Schwenkführung 43 bogenförmig, insbesondere kreisbogenförmig ausgestaltet. Das Schwenkelement 42 ist in der bogenförmigen Führung an mindestens zwei Führungspunkten, welche in die Führung eingreifen, geführt, oder mittels einer in der Bogenführung eingreifenden, sich entlang der Führung erstreckenden Kontur. Durch ein Verschieben des Schwenkelementes 42 entlang der Bogenführung wird dieses daher verschwenkt.

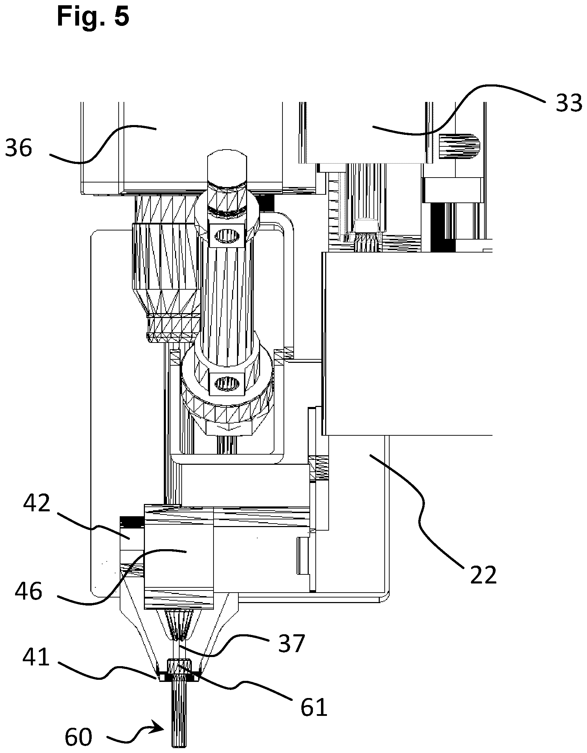

Wie aus Fig. 1 und 5 ersichtlich ist das Untergriffelement 40 an einer Schraubkonsole 22 angeordnet.

Wie in Fig. 1 ersichtlich ist diese Schraubkonsole 22 entlang einer Linearführung 21 gegenüber der Konsole 20, an welcher die Schnittstelle 10 angeordnet ist, linear in Achsrichtung des Schraubers 30 verfahrbar. Hierfür ist ein Servoantrieb vorgesehen, über welchen die Position der Schraubkonsole 22 entlang der Linearführung 21 einstellbar ist.

Der Schrauber 30 ist ebenso wie das Untergriffelement 40 an der Schraubkonsole 22 angeordnet. Im Ausführungsbeispiel ist der Schrauber 30 über eine weitere Linearachse 23 an der Schraubkonsole 22 in Achsrichtung verfahrbar gelagert.

Hierbei ist eine Verstellkonsole 31 vorgesehen, an welcher der Schrauber 30 montiert, wobei die Verstellkonsole 31 entlang der Linearführung 23 an der Schraubkonsole 22 geführt ist. Zum Verfahren der Verstellkonsole 31 und damit des Schraubers an der Schraubkonsole ist im Ausführungsbeispiel mindestens ein Linearantrieb vorgesehen. Der Linearantrieb für den Schrauber umfasst im Ausführungsbeispiel mindestens einen Hydraulik- und/oder Pneumatikzylinder oder einen elektrischen Zylinder.

Im Ausführungsbeispiel umfasst der Linearantrieb für den Schrauber 30 zwei in Serie geschaltete Linearantriebe 32 und 33, insbesondere zwei in Serie geschaltete Hydraulik- und/oder Pneumatikzylinder oder einen elektrischen Zylinder. Der erste Linearantrieb 33 weist bevorzugt einen kleineren Hub auf als der zweite Linearantrieb 32.

Der erste Linearantrieb 33 wird bevorzugt für die Ansteuerung des Schraubvorgangs eingesetzt, der zweite Linearantrieb 32 für ein Zurückfahren des Schraubers bei einem Bitwechsel.

Im Ausführungsbeispiel erfolgt die Serienschaltung der Linearantriebe, indem die Zylinder koaxial aneinander angebaut sind, und die jeweiligen Kolben einmal an der Schraubkonsole 22 und einmal an der Verstellkonsole 31 angreifen.

Der Schrauber 30 umfasst wie in Fig. 1 ersichtlich im Ausführungsbeispiel einen Motor 34, ein Getriebe 35 und eine Bitaufnahme 36.

Das Modul umfasst weiterhin einen Sensor, über welchen die Bewegung des Schraubers 30 in axialer Richtung erfasst wird, insbesondere die Bewegung des Schraubers gegenüber der Schraubkonsole 22 in axialer Richtung. Beispielsweise kann hierbei die Bewegung der Verstellkonsole 31, an welcher der Schrauber angeordnet ist, in axialer Richtung erfasst werden.

Weiterhin umfasst der Schrauber 30 einen Drehmomentsensor zur Überwachung des Drehmomentes beim Betätigen einer Schraube.

Das Modul umfasst weiterhin einen Auffangbehälter 50 zum Auffangen der Schrauben. Dieser ist an der Konsole 20 verfahrbar angeordnet. Insbesondere kann der Auffangbehälter 50 von einer Stellung seitlich neben der Achse des Schraubers in eine Position verfahren werden, in welcher die Achse des Schraubers den Auffangbehälter schneidet. Insbesondere kann hierbei die Schraubkonsole 22 mit dem Untergriffelement 40 und dem Schrauber 30 entlang der Linearachse 21 nach oben verfahren werden, und sodann der Auffangbehälter 50 unter das Untergriffelement und den Schrauber verfahren werden.

Der Auffangbehälter weist weiterhin einen Entleerungsmechanismus auf. Insbesondere kann eine Seitenwand oder der Boden des Auffangbehälters als Klappe ausgeführt sein, welche über einen Antrieb geöffnet wird, um die Schrauben aus dem Auffangbehälter zu entleeren.

Der Prozessablauf beim Lösen einer Schraube kann im Ausführungsbeispiel insbesondere wie folgt ablaufen:
1. Die Handlingeinheit, insbesondere der Roboter, verfährt das Modul mit dem Schrauber über die Schraubposition. Insbesondere stimmt hierbei die Achse des Schraubers mit der Achse der Schraube überein.
   Im Ausführungsbeispiel ist der erste Linearantrieb 33 der Schraubereinheit 30 hierbei ausgefahren, alle anderen Antriebe eingefahren. Der Schrauber ist daher zurückgefahren.
2. Die Linearachse zum Verfahren der Schraubkonsole 22 verfährt die Schraubereinheit mit dem Untergriffelement 40 auf eine Demontageposition, in welcher sich das Untergriffelement 40 in der Arbeitsposition relativ zur Schraube befindet.
3. Der erste Linearantrieb 33 des Schraubers 30 stellt den Schrauber auf die Schraube zu, so dass der Bit in die Schraubkontur der Schraube hineinfährt. Bevorzugt erfolgt dies durch ein druckreduziertes Einfahren des ersten Linearantriebs 33.
4. Das Lösen der Schraube durch den Schrauber 30 beginnt. Bevorzugt wird hierbei der Drehmomentverlauf des Schraubers erfasst.
   Beim Lösen der Schraube dreht sich diese aus dem Gewinde nach oben und drückt hierbei den ersten Linearantrieb 33, bei welchem es sich insbesondere um einen Zustellzylinder handelt, auseinander. Der erste Linearantrieb 33 erzeugt hierbei bevorzugt eine definierte Gegenkraft, drückt den Schrauber also mit einer definierten Kraft in axialer Richtung gegen die Schraube.
   Bevorzugt wird der Hub des Schraubers mittels eines Sensors, insbesondere eines Analogsensors, erfasst. Die Steuerung wertet bevorzugt das Drehmoment und den Ausdrehhub aus und überprüft, ob diese zusammenpassen. Hierdurch erhält die Steuerung eine Rückmeldung über den Prozess und überprüft, ob die Schraube ordnungsgemäß herausgedreht wird.
5. Sobald der Kopf der Schraube weit genug herausgedreht ist, fährt die Greifkontur des Untergriffelementes unter den Schraubenkopf. Diese Situation ist in Fig. 4 und 5 gezeigt, in welchen die Griffkontur 41 unter den Kopf 61 der Schraube 60 gefahren wurde. Das Untergreifen kann insbesondere erfolgen, sobald sich der Kopf der Schraube in einer geeigneten Untergriffposition befindet.
6. Der Schrauber 30 dreht die Schraube weiter, bis diese komplett aus der Verschraubung gelöst ist. Bevorzugt dreht der Schrauber die Schraube auch bei vollständig herausgedrehter Schraube weiter. Er kann jedoch auch stoppen, nachdem die Schraube komplett herausgeschraubt wurde.
7. Durch Verfahren der Schraubkonsole 22, an welcher das Untergriffelement angeordnet ist, in axialer Richtung wird die Greifkontur 41 des Untergriffelementes nun in Anschlag mit der Unterseite des Kopfes 61 der Schraube 60 gebracht. Während die Schraubkonsole 22 nach oben verfahren wird, verbleibt der Schrauber 30 zunächst in seiner Absolutposition unverändert an der Schraube, indem der Schrauber 30 über den ersten Linearantrieb 33 mit einer entgegengesetzten Hubbewegung gegenüber der Schraubkonsole auf das Untergriffelement zubewegt wird, so dass die Schraube zunächst in ihrer Position im Schraubloch verbleibt und durch den Schrauber im Schraubloch geklemmt bleibt, bis der Kopf 61 der Schraube zwischen dem Bit 37 und der Greifkontur 41 geklemmt ist. Auch dies kann einfach dadurch erfolgen, dass der Linearantrieb 33 eine konstante Gegenkraft erzeugt, mit welcher der Schrauber gegen die Schraube gedrückt wird.
   Durch das Klemmen des Schraubenkopfes zwischen der Greifkontur 41 des Untergriffelementes und dem Bit 37 des Schraubers ist die Schraube nun verliersicher am Modul gehalten.
8. Die Schraubkonsole 22 mit dem Schrauber 30 und dem Untergriffelement 40 wird über die Linearachse 21 weiter zurück in eine obere Position zum Abwurf der Schraube verfahren, in welcher die Schraube höher angeordnet ist als die Oberkante des Auffangbehälters 50. Der Auffangbehälter wird nun unter den Schrauber 30 und das Untergriffelement 42 verfahren. Er befindet sich nun in einer Abwurfstellung unterhalb der zwischen dem Bit 37 und der Greifkontur 41 geklemmten Schraube.
   Parallel zu Schritten 7 und/oder 8 kann die Handlingeinheit das Modul auf die nächste Schraubposition verfahren, da hierbei die Schraube sicher gehalten wird.
9. Die Greifkontur 41 des Untergriffelementes fährt unter der Schraube weg und der erste Linearantrieb 33 des Schraubers fährt aus und schiebt den Schrauber 30 nach oben. Hierdurch wird die Schraube freigegeben.
10. Die Schraube fällt sicher in den Schraubenauffangbehälter.
11. Der Schraubenauffangbehälter wird wieder eingefahren.
   Nunmehr kann das Verfahren bei einer neuen Schraube wiederum mit Schritt 2 beginnen.

Ist der Schraubenauffangbehälter 50 durch die Demontage der Schrauben gefüllt, muss dieser in eine definierte Abwurfbox entleert werden. Ein Ausführungsbeispiel eines Prozessablaufes zum Abwerfen der gesammelten Schrauben kann wie folgt ausgestaltet sein:
1. Die Handlingeinheit verfährt das Modul mit dem Schraubenauffangbehälter 50 über eine Abwurfbox für die Schrauben.
2. Eine Entleerungsklappe des Schraubenauffangbehälters 50 wird über einen Antrieb, beispielsweise einen Zylinder, geöffnet.
3. Nunmehr erfolgt eine Wartezeit, so dass sich der Schraubenauffangbehälter 50 leeren kann. In einer möglichen Ausgestaltung hilft die Handlingeinheit durch schräges Halten des Moduls und damit des Schraubenauffangbehälters 50 nach.
4. Die Entleerungsklappe wird wieder geschlossen.
5. Die Handlingeinheit verfährt das Modul zur nächsten Schraubposition oder zu einem Bitwechsel.

Im Ausführungsbeispiel erlaubt das Modul einen Bitwechsel. Dies ermöglicht es, unterschiedliche Schrauben lösen zu können. Die vorliegende Erfindung ermöglicht dabei, dass trotz Bitwechsel eine hohe Varianz von verschiedenen Schrauben mit verschiedenen Schraubenköpfen gehandhabt werden können, da sie mit dem gleichen Untergriff aufgenommen werden können.

Es muss daher nur der Bit gewechselt werden, während das Untergriffelement für unterschiedliche Schrauben eingesetzt werden kann. Andere Lösungen am Markt können dies je Schraube immer nur mit einem einzigen Schraubenkopfdesign.

Ein mögliches Ausführungsbeispiel eines Prozessablaufes beim Bitwechsel kann wie folgt durchgeführt werden:
1. Der zweite Linearantrieb 32 zum Bewegen des Schraubers 30 und gegebenenfalls auch der erste Linearantrieb 33 werden ausgefahren, insbesondere komplett ausgefahren. Der Bit 37 fährt hierdurch komplett aus dem Untergriffelement 40 sowie dessen Führung aus und ist komplett frei erreichbar.
2. Die Handlingeinheit fährt das Modul zu einem Bitbahnhof, an welchem mehrere Bitaufnahmen vorgesehen sind, in welchen unterschiedliche Bits angeordnet sind. Dort wird das Bit 37 des Schraubers gewechselt.
3. Nach erfolgreichem Bit-Wechsel fährt der zweite Linearantrieb 32 wieder ein und der neue Bit taucht in das Untergriffelement 40 und/oder dessen Führung wieder ein.
4. Die Handlingeinheit verfährt das Modul zur nächsten Schraubposition.

Das erfindungsgemäße Untergriffelement erlaubt insbesondere in der Kombination mit einem Bitwechsel ein sicheres Schraubenentnehmen für eine Vielzahl von unterschiedlichen Schrauben und Schraubenköpfe. Das erfindungsgemäße Modul ist hierdurch sehr flexibel einsetzbar.

Weiterhin existiert eine weitere Anwendungsmöglichkeit für das erfindungsgemäße Modul.

Insbesondere kann hierbei das Untergriffelement 40 auch zum Holen von Schrauben genutzt werden, so dass diese beim Verschrauben zwischen der Greifkontur 41 und dem Bit eingespannt sind. Das Modul kann daher auch zum Setzen von Schrauben und nicht nur zum Lösen von Schrauben eingesetzt werden.

Dies ist insbesondere deshalb von Vorteil, weil lange Schraubenbolzen oftmals nicht zugeschossen werden können, sondern aus einer Bereitstellung einzeln entnommen werden müssen.

Wird das Modul zum Setzen von Schrauben eingesetzt, erfolgt ein beispielhafter Prozessablauf wie folgt:
1a. Das Modul wird über die Handlingeinheit in eine Aufnahmeposition über einer in einer Bereitstellung angeordneten Schraube verfahren. Gegebenenfalls kann das Untergriffelement über die Linearachse 21 in seine Arbeitsposition zur Schraube herangefahren werdenoder dies kann über die Handlingeinheit erfolgen. Der Schrauber 30 ist über den ersten Linearantrieb 33 zurück gefahren.
1b. Alternativ ist die Schrauben-Bereitstellung verfahrbar am Modul angeordnet und wird zur Aufnahme einer Schraube vor das über die Linearachse 21 zurückverfahrene Schraubmodul verfahren. Das Untergriffelement wird sodann über die Linearachse 21 in seine Arbeitsposition zur in der Schrauben-Bereitstellung bereitgestellten Schraube herangefahren.
2. Die Greifkontur wird unter den Kopf der Schraube, welche in der Bereitstellung bereitgestellt wurde, verfahren. Durch Verfahren des Schraubers 30 über den ersten Linearantrieb 33 in Richtung auf das Untergriffelement zu wird der Schraubenkopf zwischen der Greifkontur und dem Bit des Schraubers geklemmt. Ist die Schrauben-Bereitstellung am Modul angeordnet, wird die geklemmte Schraube durch zurückfahren des Schraubmoduls über die Linearachse 21 aus der Bereitstellung entnommen und diese in ihre inaktive Position zurückverfahren.
3. Die Handlingeinheit verfährt das Modul über eine Schraubposition. Über die Linearachse 21 wird der Schrauber mit dem Untergriffelement in Richtung auf die Schraubposition verfahren, bis die Schraube in das Schraubloch eingreift.
4. Ist die Schraube zwischen Bit und Schraubloch eingespannt, kann das Untergriffelement in seine Warteposition zurückverfahren werden. Das Einschrauben kann nun durch Betätigen des Schraubers und den ersten Linearantrieb 33 erfolgen.

Durch das erfindungsgemäße Modul kann daher auf ein zusätzliches Handling zum Picken und Bereitstellen der Schrauben verzichtet werden.

Bevorzugt kommt das Modul jedoch wie oben beschrieben beim Lösen und Entsorgen von Schrauben zum Einsatz.

Insbesondere kann das Modul bei der Demontage oder Montage von Batterieeinheiten eingesetzt werden, beispielsweise zum Herausschrauben oder Setzen von Schrauben, mit welchen der Deckel einer Batterieeinheit auf einem Gehäuse verschraubt ist.

Das erfindungsgemäße Modul bzw. das System aus Handlingeinheit und Modul kann insbesondere Teil einer Demontage-Einrichtung zur Demontage von Batterieeinheiten oder einer Montage-Einrichtung zur Montage von Batterieeinheiten eingesetzt werden.

Die Ansteuerung von Modul und Handlingeinheit erfolgt bevorzugt so, dass sämtliche der beschriebenen Prozesse automatisiert und ohne händischen Eingriff erfolgen.

## Patentansprüche

1. Modul zur automatisierten Handhabung von Schrauben, insbesondere beim Lösen und/oder Setzen der Schrauben, insbesondere bei der Demontage oder Montage einer Batterieeinheit, das Modul umfassend:
- eine Schnittstelle zur Montage des Moduls an einer Handlingeinheit, insbesondere einem Roboter,
- eine Konsole und
- einen Schrauber,
**dadurch gekennzeichnet,**
**dass** das Modul ein Untergriffelement mit einer Greifkontur aufweist, welche unter den Kopf einer Schraube verfahrbar ist, um diese am Modul zu sichern.

2. Modul nach Anspruch 1, wobei die Greifkontur gabelförmig ausgeführt ist und zwei Zinken aufweist, welche unter den Kopf der Schraube verfahrbar sind, wobei zwischen den Zinken eine Aussparung für die Schraube vorgesehen ist.

3. Modul nach Anspruch 1 oder 2, welches so ausgestaltet ist, dass die Schraube nur von einer Seite untergriffen wird.

4. Modul nach einem der vorangegangenen Ansprüche, wobei sich die Greifkontur in einer Untergriffstellung von jener Seite aus gesehen, von welcher die Greifkontur unter den Kopf der Schraube verfahren wird, über eine durch die Achse des Schraubers definierte Mittelebene der Schraube hinaus weiter zur freien Seite erstreckt, so dass der Kopf der Schraube auf beiden Seiten der Mittelebene durch die Greifkontur gehalten wird, wobei insbesondere Zinken der Greifkontur über die Mittelebene der Schraube hinaus reichen.

5. Modul nach einem der vorangegangenen Ansprüche, wobei das Untergriffelement über einen Aktor in eine Untergriffstellung unter den Kopf der Schraube bewegbar ist.

6. Modul nach einem der vorangegangenen Ansprüche, wobei das Untergriffelement verschwenkbar an dem Modul angeordnet ist und die Greifkontur durch eine Schwenkbewegung des Untergriffelements unter den Kopf der Schraube verfahrbar ist,
wobei das Untergriffelement bevorzugt entlang einer Bogenführung geführt ist und ein Verfahren entlang der Bogenführung die Schwenkbewegung erzeugt, und/oder wobei bevorzugt die Greifkontur an mindestens einem Schwenkarm angeordnet ist, welcher in einer Wartestellung des Untergriffelements in einer Ansicht senkrecht zu einer Schwenkebene zumindest teilweise mit der Achse des Schraubers überlappt und sich in einer Ansicht entlang der Schwenkebene neben der Achse des Schraubers erstreckt, und/oder wobei bevorzugt zwei Schwenkarme vorgesehen sind, welche die Greifkontur tragen und sich in einer Ansicht entlang der Schwenkebene auf gegenüberliegenden Seiten der Achse des Schraubers erstrecken und/oder auf gegenüberliegenden Seiten der Achse des Schraubers geführt sind.

7. Modul nach einem der vorangegangenen Ansprüche, wobei das Modul mindestens einen Antrieb aufweist, mit welchem der Schrauber entlang seiner Achse relativ zum Untergriffelement verfahrbar ist.

8. Modul nach Anspruch 7, mit einer Steuerung, welche so ausgestaltet ist, dass sie den mindestens einen Antrieb zum Verfahren des Schraubers in eine Schraubposition und/oder während des Herausschraubens oder Einschraubens der Schraube und/oder zum Klemmen der Schraube betätigt, wobei der Antrieb bevorzugt so betätigt wird, dass der Schrauber beim Herausschrauben durch die axiale Bewegung der Schraube gegen die Kraft des Antriebs zurückbewegt und beim Einschrauben durch die Kraft des Antriebs gegen die Schraube gepresst und mit dieser nach vorne bewegt wird und/oder dass der Antrieb den Schrauber beim Herausschrauben oder Einschrauben mit einer definierten Kraft beaufschlagt, und/oder wobei der Antrieb bevorzugt so betätigt wird, dass der Schrauber eine herausgeschraubte oder zu setzende Schraube gegen die Greifkontur des Untergriffelementes klemmt.

9. Modul nach Anspruch 7 oder 8, wobei zwei in Serie geschaltete Linearantriebe, zum Bewegen des Schraubers, insbesondere zwei Zylinder-Kolbenanordnungen, vorgesehen sind, wobei die beiden Linearantriebe bevorzugt unterschiedliche Verfahrwege aufweisen und/oder wobei das Modul bevorzugt eine Steuerung aufweist, welche so ausgestaltet ist, dass sie den ersten Linearantrieb zum Verfahren des Schraubers in eine Schraubposition und/oder während des Herausschraubens oder Einschraubens betätigt, wobei der zweite Linearantrieb hierbei nicht betätigt wird, und/oder den zweiten Linearantrieb zu einem Zurückfahren des Schraubers in eine Bit-Wechsel-Position betätigt.

10. Modul nach einem der vorangegangenen Ansprüche, wobei das Modul einem Auffangbehälter für die Schrauben umfasst, welcher bevorzugt unter eine am Untergriffelement gehaltene Schraube verfahrbar ist und/oder einen Entleerungsmechanismus aufweist, und/oder eine Schraubenbereitstellung, welche bevorzugt vor den Schrauber verfahrbar ist.

11. Modul nach einem der vorangegangenen Ansprüche, wobei das Modul eine Linearachse aufweist, über welche eine Schraubkonsole, an der der Schrauber und das Untergriffelement angeordnet sind, in Richtung der Achse des Schraubers verfahrbar ist, insbesondere relativ zu einem Auffangbehälter für die Schrauben und/oder einer Schraubenbereitstellung und/oder relativ zu der Schnittstelle, wobei der Schrauber bevorzugt gegenüber der Schraubkonsole und dem daran angeordneten Untergriffelement über mindestens einen weiteren Antrieb in Richtung seiner Achse verfahrbar ist,
wobei der Auffangbehälter bevorzugt für den Schraubenabwurf unter die Schraube verfahrbar ist, wenn die Konsole relativ zum Auffangbehälter in eine Abwurfposition verfahren wurde.

12. Modul nach Anspruch 11, mit einer Steuerung, welche so ausgestaltet ist, dass sie die Linearachse betätigt, um die Schraubkonsole mit dem Untergriffelement und dem Schrauber in eine Arbeitsposition in Bezug auf eine herauszuschraubende oder aufzunehmende Schraube und/oder in eine Einschraubposition zu verfahren, und/oder dass sie nach dem Herausschrauben einer Schraube die Linearachse betätigt, um die Schraubkonsole mit dem Untergriffelement und der daran gehaltenen Schraube in eine Abwurfposition zu verfahren.

13. System zur automatisierten Handhabung von Schrauben, insbesondere beim Lösen und/oder Setzen der Schrauben, insbesondere bei der Demontage oder Montage einer Batterieeinheit, mit einem Modul nach einem der vorangegangenen Ansprüche, einer Handlingeinheit, an welcher das Modul angeordnet ist, und einer Steuerung zur Ansteuerung der Handlingeinheit und des Moduls.

14. System nach Anspruch 13, wobei die Steuerung so ausgestaltet ist, dass die Handlingeinheit das Modul während des Herausschraubens und/oder Setzens einer Schraube nicht verfährt und/oder das Modul verfährt, während eine herausgeschraubte Schraube abgeworfen oder eine neue Schraube aufgenommen wird.

15. Verfahren zur automatisierten Handhabung von Schrauben, insbesondere beim Lösen und/oder Setzen der Schrauben, insbesondere bei der Demontage oder Montage einer Batterieeinheit, mit einem Modul nach einem der Ansprüche 1 bis 12 und/oder einem System nach einem der Ansprüche 13 und 14, wobei die Greifkontur unter den Kopf der Schraube verfahren wird, um diese am Modul zu sichern, was bevorzugt erfolgt, sobald der Schraubkopf um eine vorbestimmte Strecke herausgeschraubt wurde oder eine Schraube aufgenommen werden soll.
